# EUROPEAN PATENT APPLICATION

(11) **EP 1 788 793 A2**
(43) Date of publication of application: **23.05.2007**
(21) Application number: 06018275.5
(22) Date of filing: 31.08.2006
(51) Int. Cl.: H04N 1/00

(54) **Setting screen for an image processing device**

(30) Priority: 18.11.2005 JP 2005333612
(71) Applicant: MURATA KIKAI KABUSHIKI KAISHA, Kyoto (JP)
(72) Inventor: Motoyoshi, Koichi Murata Kikai K.K., Kyoto 612-8686 (JP)
(74) Representative: Kirschner, Klaus Dieter

(57) **Abstract**

The present invention is intended to provide an image processing device in which the function setting screen is easily viewable and good in operability even when the screens for setting functions are distributed in a plurality of pages because the display area is small. The invention proposes an image processing device which is adapted to set the function of image processing by operating function setting item buttons on the function setting screen displayed on the operation display screen provided on the operation display unit, comprising a display control unit that displays a page ejection button on each function setting screen in a plurality of pages and switches the page of the function setting screen to anther page when the page ejection button displayed on each function setting screen is operated.

## Description

The present invention relates to an improved image processing device such as a facsimile device having an operation display screen configured with a touch panel or the like for setting functions.

In the prior art, the image processing device such as the facsimile device, a copying machine, or a multi-function peripheral has an operation display unit configured of an operation display screen such as a touch panel, an operation switch or a ten-key keyboard.

In general, in the I mage processing device of this type, in particular, of a large type for office use provided with a reading unit such as a flat bed scanner and a print output unit including a plurality of recording paper cassettes, the ratio of the operation display unit with respect to the size of the entire device is small in order to reduce the required space.

Therefore, in the image processing device as described above, since the display area of the operation display screen is also small, majority of the function setting screens for setting the function such as copy or facsimile transmission are configured of a menu screen including a plurality of set item buttons and setting screens which are accessible hierarchically from the menu screen for individual setting.

However, in the device whose operation display screen is small, there is a case in which even the setting items of the menu for setting the function cannot be displayed completely within the display area. In such a case, the plurality of setting items which constitute the menu must be distributed to a plurality of pages.

However, in such a menu display, it is difficult to figure out the number or the contents of the setting items, and hence ingenuity for a display system including a page ejection method is required.

In view of such circumstances, it is an object of the invention to provide an image processing device in which the screen is easily viewable and good in operability even when the screens for setting functions are distributed in a plurality of pages because the display area is small.

In order to achieve the above-described object, the image processing device according to a first aspect of the invention is an image processing device which is adapted to set the function of image processing by operating function setting item buttons on the function setting screen displayed on the operation display screen provided on the operation display unit, comprising a display control unit that displays page ejection buttons on each function setting screen in a plurality of pages and switches the page of the function setting screen to anther page when the page ejection button displayed on each function setting screen is operated.

Preferably, according to a second aspect of the invention, the page ejection button is displayed at an upper, lower, left or right end of the operation display screen so as to interrupt a part of a peripheral frame of a display frame.

Preferably, according to a third aspect of the invention, the function setting screen is switched to display a next page via a predetermined animation display mode when the page ejection button is operated.

Preferably, according to a fourth aspect of the invention, a current page number is also displayed on each of the plurality of function setting screens.

According to the image processing device in the invention, the function setting screen displayed on the operation display screen includes the page ejection button, and the display of the operation display screen composed of a plurality of pages is cyclically switched to the next page every time when the page ejection button is operated. Therefore, even when the setting items for setting the function are distributed to a plurality of pages, these items can be displayed in sequence with a simple operation, so that the user can easily figure out the number or contents of the setting items.

According to the image processing device in the invention, the page ejection button is arranged at the upper, lower, left or right end of the function setting screen, and the end side of the page ejection button is displayed without the frame. Therefore, the display without the frame can make the user understand at once that there exist subsequent pages.

According to the image processing device in the invention, when the page ejection button is operated, the next page is displayed by a predetermined display switching mode. Therefore, the fact that the page is being switched to the next page can be visually understood, for example, by deleting the current page once and then displaying a new page as if it moves in from the upper side or the lower side or displaying the new page in a reduced scale at a center of the screen and enlarging gradually when the page ejection button is operated.

According to the image processing device in the invention, the function setting screen also displays the current page number. Therefore, the user can figure out which page the user is viewing now.

Other features, elements, processes, steps, characteristics and advantages of the invention will become more apparent from the following detailed description of preferred embodiments of the invention with reference to the attached drawings.

Embodiments of the invention will now be described with reference to the drawings.
Fig. 1A is an appearance view of an image processing device according to the invention;
Fig. 1B is an appearance view of an operation display unit;
Fig. 2 is a block diagram showing an example of an internal configuration of the image processing device in the invention;
Fig. 3A, 3B and 3C illustrate a screen configuration, a page ejection operation, and a display switching mode of the function setting screen displayed on the operation display screen in the image processing device of the invention; Fig. 3A shows an initial display of the function setting screen, Fig. 3B shows a state of migration of screen switching at the time of the page ejection operation, and Fig. 3C shows a screen display after the page ejection;
Fig. 4 is a flowchart showing a switching operation of the image processing device in the invention.
Fig. 5A and 5B illustrate another display switching mode when the page ejection operation of the image processing device in the invention is performed, in which Fig. 5A shows an example in which the function setting screen appears from the top of the operation display screen, and Fig. 5B shows an example in which the function setting screen appears from the center of the operation display screen while being gradually enlarged.

Although a facsimile/copy multi-function peripheral is exemplified as an image processing device, the invention can be applied to a single function device such as a facsimile device, a copying machine and a printer, as well as the multi-function peripheral in which these devices are combined as a matter of course.

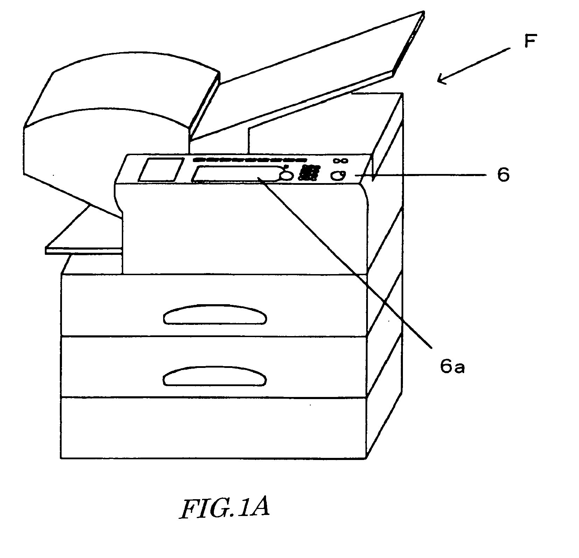

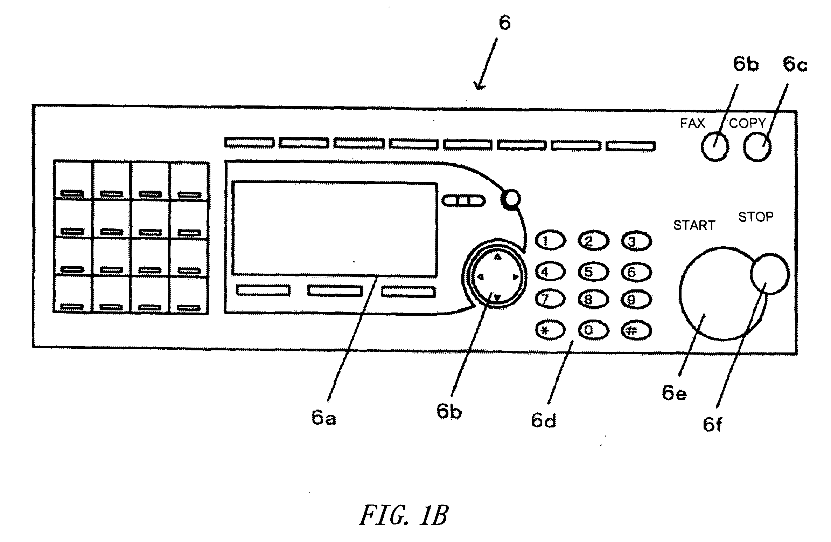

Fig. 1A is an appearance view of an image processing device according to the invention, and Fig. 1B is an appearance view of an operation display unit.

An operation display unit 6 of an image processing device F includes an operation display screen 6a, a facsimile function setting key 6b, a copying machine setting key 6c, a ten-key keyboard 6d, a start key 6e for staring a job, and a stop key 6f for stopping the job or cancelling the setting, and is arranged at a position where a user on the front side of the device can easily operate in a standing posture as shown in Figs 1A and 1B. The operation display screen 6a is arranged on the operation display unit 6 and is configured with a touch panel that the user can operate and display by touching with his/her finger as shown in Fig. 1B.

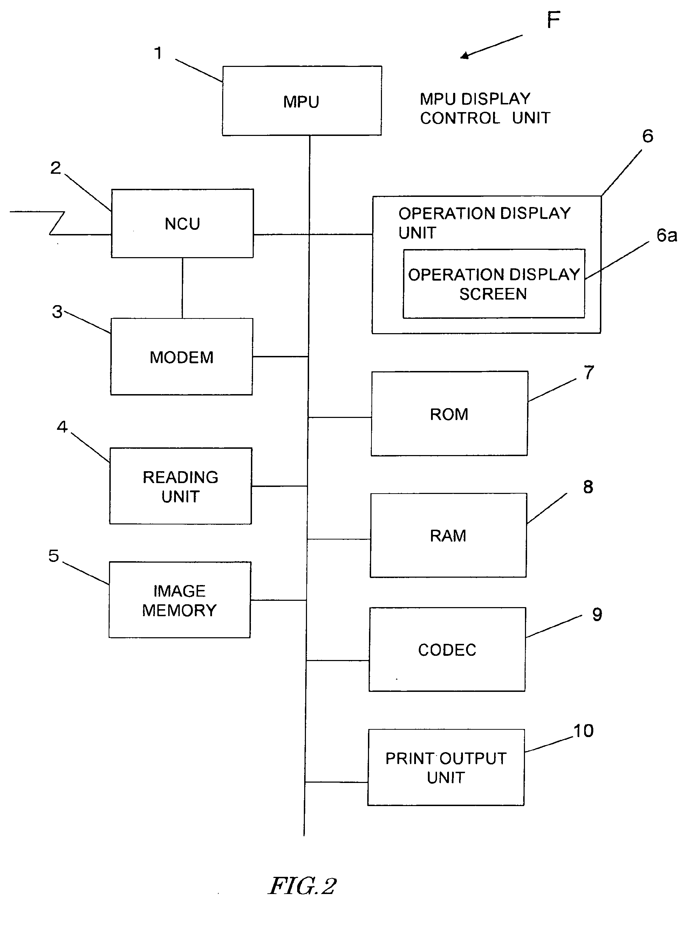

Fig. 2 is a block diagram showing an internal configuration of the image processing device F in the invention.

The image processing device F includes an MPU 1,an NCU 2, a modem 3, a reading unit 4, an image memory 5, the operation display unit 6 arranged on the front side of the device, a ROM 7, a RAM 8, a CODEC 9, in which various programs or constant data are stored, and a print output unit 10.

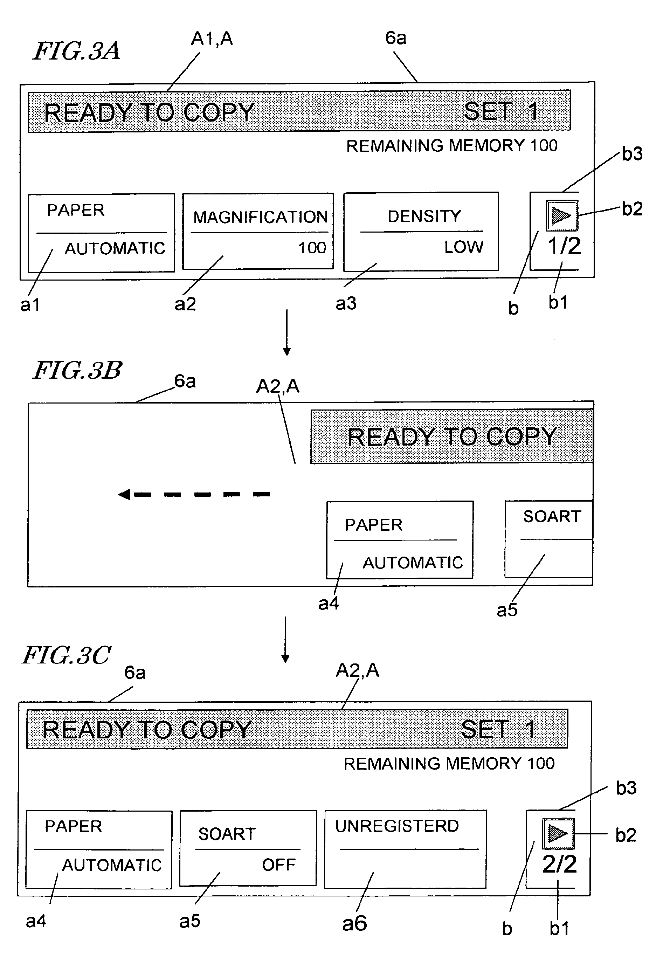

The MPU 1 constitutes a display control unit for controlling the respective units shown above according to the respective programs, and displaying a function setting screen A (see Fig. 3) including a plurality of pages as described later on the operation display screen 6a. The NCU 2 performs a receiving and sending network control for a public line N, and the modem 3 modulates and demodulates the transmission data. Accordingly, the facsimile transmission is performed.

The reading unit 4 includes a flat bed scanner (not shown) and the like, reads an original document image, and outputs binarized image data to the image memory 5.

The operation display unit 6 includes the operation display screen 6a configured with a touch panel or the like as described in conjunction with Fig. 1.

Various setting data or the variable data are stored in the RAM 8. The CODEC 9 has a function to encode the read image data by systems such as MH, MR, and MMR for transmission, and to decode the received image data for print output.

The print output unit 10 performs an action to output the read image or the received image to a recording paper set in a manual paper feed tray or the cassette.

The image recording device F has a facsimile transmission basic function to encode the image data read by the reading unit 4 in sequence, store the same once in the image memory 5, and then transmit the same to a destination facsimile device (not shown) via the modem 3 and the NCU 2, and upon reception of the image data, store the received image data in the image memory 5, read and decode the same in sequence, and print and output by the print output unit 10, and a function to print output the image data of the original document read by the reading unit 4 to the recording paper.

The image processing device F is configured in such a manner that setting of the function such as the facsimile transmission and the copying function can be done on the function setting screen A displayed on the operation display screen 6a of the operation display unit 6, and the function can be set by operating the respective function setting keys 6b, 6c to display the respective function setting screens A, operating the various setting item buttons provided in the screen, then , switching to screens in the lower hierarchy, in which individual items can be set on these screens.

Since the current setting details are displayed on the buttons on the respective setting items, the current setting details can be recognized without switching the screens to the lower hierarchy every time. Alternatively, the buttons may be adapted to switch the setting details every time when they are operated without switching to the screens to the lower hierarchy.

The respective function setting screens A display the setting items in the menu form. However, since it is necessary to display a number of setting item buttons on the operation display screen 6a, the function setting screens A are divided and displayed in a plurality of pages in the invention.

In this embodiment, in the case of the copying function, there are "sheet selection", "magnification", "density", "image quality", and "sort" as the setting items, and the function setting screen A including two pages; a first page including the three items of "sheet selection", "magnification" and "density", and a second page including the two items of "image quality" and "sort", which are switched and displayed by the switching operation.

The invention is characterized by the screen configuration of the function setting screen A including the plurality of pages, the page ejection operation, and the display switching mode.

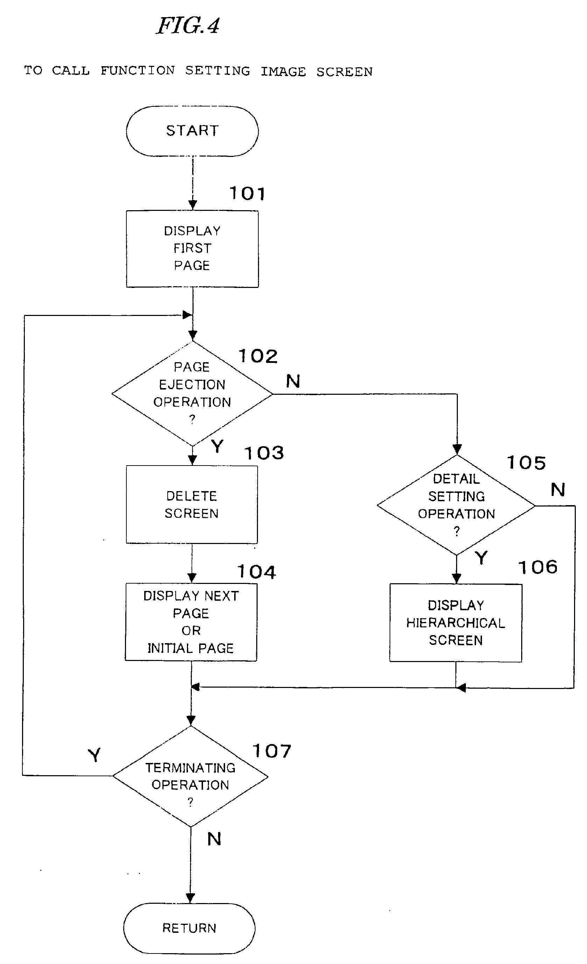

Referring now to Fig. 3 and Fig. 4, the display switching operation of the function setting screen A will be described.

Figs. 3A, 3B and 3C illustrate a screen configuration, the page ejection operation, and the display switching mode of the function setting screen A displayed on the operation display screen 6a. Fig. 3A shows an initial display of the function setting screen, Fig. 3B shows a state of migration of screen switching at the time of the page ejection operation, and Fig. 3C shows a screen display after the page ejection, respectively. An arrow of a broken line in Fig. 3B indicates the direction of movement of display of the screen, and is not displayed on the screen. Although the screen is adapted to move from the right to the left when being switched in this example, the switching can also be made by a display mode in which the screen is moved downward from the top as described later.

Fig. 4 is a flowchart showing a display switching operation of the function setting screen A.

Upon detection of calling of the function setting screen A by the copy function setting key 6c, the display control unit 1 displays a screen A1 of a first page including various setting item buttons a1, a2, a3 for "sheet selection", "magnification" and "density" (Step 101 in Fig. 3A and Fig. 4).

In the screen A1, a page ejection button b including or being added with an indication "1/2" which indicates the current page number/the number of total pages b1 and an arrow b2 which shows that there exists a next page in an eye-friendly manner is arranged on the right end of the screen, and a peripheral frame b3 of the page ejection button b is displayed without frame at the right end thereof.

When the page ejection button b is operated in this state, for example, the screen is once deleted, and then a screen A2 of the second page appears from the right side of the display area, as shown in Fig. 3, and is displayed in a predetermined switching animation display mode in which the screen is moved in the direction of the broken arrow, and then the respective setting item buttons a4 and a5 for "image quality" and "sort", an unregistered free button a6, and a page ejection button b including "2/2" which indicates the current page number/the total number of pages b1 (Fig. 3B, 3C and Step S102 to 104 in Fig. 4) are displayed. In the second page similarly to the first page, the peripheral frame b3 of the page ejection button b is displayed with the end side removed and without the frame.

When the buttons a1 to a5 of the respective setting items are operated without the operation of the page ejection button b, the screens of the lower hierarchy (not shown) in which the detailed setting can be made therein respectively are displayed (Steps S107, 108 in Fig. 4).

In a state in which the page ejection operation is performed in a state in which the second page is displayed, the initial page is displayed again (Steps S102 to 104 in Fig. 4).

In other words, the function setting screen A including the plurality of pages is cyclically and repeatedly switched in a forward direction to another page every time when the page ejection operation is performed until an operation to terminate the corresponding screen such as an operation of the start key 6e, an operation of the stop key 6f, or an operation to switch to another screen (Steps S102 to 104, 107 in Fig. 4).

As described above, since the switching of the display of the function setting screen A including the plurality of pages is performed cyclically every time when the page ejection button b is operated, even though the function setting screen A is distributed in a plurality of pages, these pages can be displayed in sequence with a simple operation, so that the user can figure out the number or the contents of the setting items easily.

Since the page ejection button b is arranged at the upper, lower, left or right end of the function setting screen A and the end side of the peripheral frame b3 of the page ejection button b is displayed without the frame, the user can recognize that there exists a screen continued to the current page at a glance.

In addition, since the next page screen is displayed in the predetermined display switching mode as described above when the page ejection button b is operated, the user can visually recognize that operation of switching the page to the next page is being in progress.

The display switching by the page ejection may be configured to be done in both normal and reverse directions. In such a case, by arranging the page ejection buttons b on the right and left ends of the function setting screen A displayed on the operation display screen 6a and operating either one of these, switching to the next page and to the previous page are achieved. In this case, the cyclic display switching may be enabled or disabled.

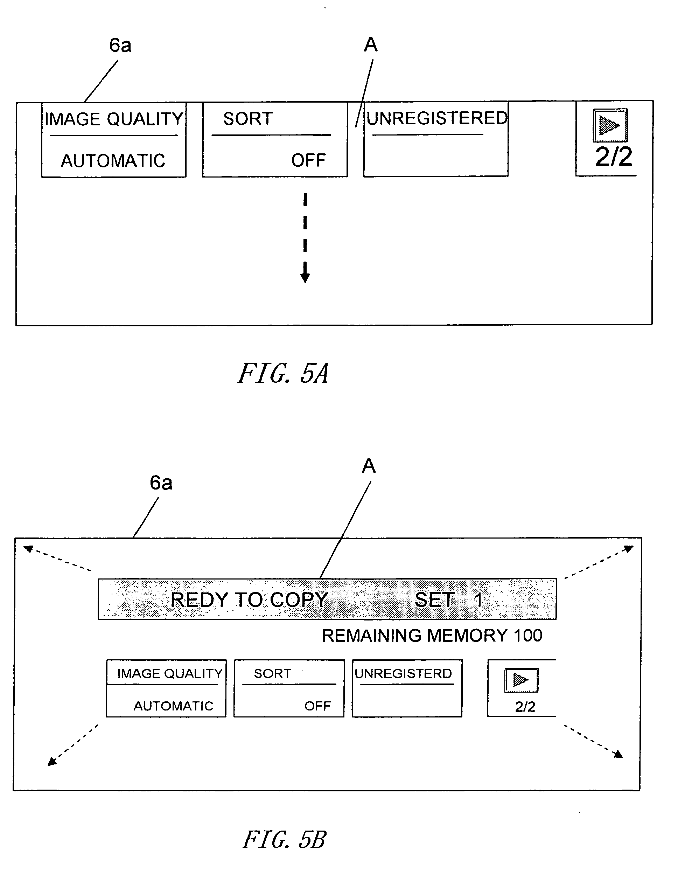

Figs. 5A and 5B illustrate another switching display mode when the page ejection operation is performed with the device in the invention. Fig. 5A shows an example in which the function setting screen A appears from the top of the operation display screen 6a, and Fig. 5B shows an example in which the function setting screen A appears from the center of the operation display screen 6a while being gradually enlarged. Arrows of a broken line in the drawings indicate the direction of movement of display of the screen, and are not displayed in the screen.

It is also possible to delete the current page when the page ejection operation is done, then display a phrase such as "loading the next page..." at a center or the like of the operation display screen 6a for about one second, and then switch to the next page.

## Claims

1. An image processing device comprising:
an operation display unit;
a setting unit for setting the function of the image processing by operating function setting item buttons on a function setting screen displayed on an operation display screen provided on the operation display unit; and
a display control unit which displays a page ejection button displayed on each function setting screen in a plurality of pages and switches the page of the function setting screen to another page when the page ejection button displayed on each function setting screen is operated.

2. The image processing device according to Claim 1, wherein the page ejection button is displayed at an upper, lower, left or right end of the operation display screen so as to interrupt a part of a peripheral frame of a display frame.

3. The image processing device according to Claim 1, wherein the function setting screen is switched to display a next page via a predetermined animation display mode when the page ejection button is operated.

4. The image processing device according to Claim 2, wherein the function setting screen is switched to display a next page via a predetermined animation display mode when the page ejection button is operated.

5. The image processing device according to Claim 1, wherein a current page number is also displayed on each of the plurality of function setting screens.

6. The image processing device according to Claim 2, wherein a current page number is also displayed on each of the plurality of function setting screens.

7. The image processing device according to Claim 3, wherein a current page number is also displayed on each of the plurality of function setting screens.

8. The image processing device according to Claim 4, wherein a current page number is also displayed on each of the plurality of function setting screens.
